# EUROPEAN PATENT APPLICATION

(11) **EP 4 773 730 A1**
(43) Date of publication of application: **08.07.2026**
(21) Application number: 24893231.1
(22) Date of filing: 05.11.2024
(51) Int. Cl.: H04W 88/08

(54) **BASE STATION BASED ON DIFFERENTIAL POSITIONING TECHNIQUE, AND BASE STATION ADDRESSING DEVICE AND BASE STATION ADDRESSING METHOD**

(30) Priority: 20.11.2023 CN 202311552725; 20.11.2023 CN 202323137227 U
(71) Applicant: Nanjing Chervon Industry Co., Ltd., Nanjing, Jiangsu 211106 (CN)
(72) Inventor: ZHANG, Peng, Nanjing, Jiangsu 211106 (CN); ZHAO, Dan, Nanjing, Jiangsu 211106 (CN); LI, Feng, Nanjing, Jiangsu 211106 (CN); YAO, Surui, Nanjing, Jiangsu 211106 (CN); SHI, Lingjian, Nanjing, Jiangsu 211106 (CN); KONG, Meng, Nanjing, Jiangsu 211106 (CN)
(74) Representative: Sun, Yiming
(86) International application number: PCT/CN2024/129894
(87) International publication number: WO 2025/108073

(57) **Abstract**

Provided are a base station based on differential positioning technology, a base station addressing device, and a base station addressing method. The base station includes a base station body and a base station addressing device. The base station addressing device includes: an acquisition module configured to acquire satellite observation data at a current observation point; a calculation module configured to evaluate the observation quality at the observation point according to the satellite observation data; and an output module configured to output a first prompt according to the observation quality, where the first prompt indicates the suitability of the observation point for mounting the base station. The base station addressing device is detachably connected to the base station body so that the base station addressing device is capable of being detached from the base station body to perform an addressing task.

## Description

This application claims priority to Chinese Patent Application No. 202311552725.7 filed with the China National Intellectual Property Administration (CNIPA) on Nov. 20, 2023 and Chinese Patent Application No. 202323137227.4 filed with the CNIPA on Nov. 20, 2023, the disclosures of which are incorporated herein by reference in their entireties.

### TECHNICAL FIELD

The present application relates to the technical field of power tools, for example, a base station based on differential positioning technology, a base station addressing device, and a base station addressing method.

### BACKGROUND

A self-propelled device represented by a mower performs a work task such as mowing within a certain working region. Considering that a Global Navigation Satellite System (GNSS) is affected by weather, obstructions, and other factors, the positioning accuracy is limited. The self-propelled device forms a working system containing a base station and implements its own positioning and navigation within the working region by adopting the differential positioning manner. Although providing the base station and adopting the differential positioning manner can improve the positioning and navigation of the self-propelled device, the accuracy is also affected by the mounting position of the base station. The base station mounted at an unsuitable position seriously affects the operation of the self-propelled device.

This part provides background information related to the present application, and the background information is not necessarily the existing art.

### SUMMARY

An object of the present application is to solve or at least alleviate part or all of the preceding problems. Therefore, the present application provides a base station based on differential positioning technology, a base station addressing device, and a base station addressing method.

The present application adopts the technical solutions below.

A base station based on differential positioning technology is used for positioning and navigating a self-propelled device performing a work task within a working region. The base station includes a base station body and a base station addressing device. The base station addressing device includes: an acquisition module configured to acquire satellite observation data at a current observation point; a calculation module configured to evaluate the observation quality at the observation point according to the satellite observation data; and an output module configured to output a first prompt according to the observation quality, where the first prompt indicates the suitability of the observation point for mounting the base station. The base station addressing device is detachably connected to the base station body so that the base station addressing device is capable of being detached from the base station body to perform an addressing task.

In some examples, the base station addressing device includes indicator lights, the first prompt is a state of the indicator lights, and the output module outputs the first prompt through the indicator lights.

In some examples, the indicator lights include multiple light beads with different orientations, and the output module indicates a movement direction from the current observation point to a next observation point by turning on some of the multiple light beads.

In some examples, the first prompt is an observation quality score of the observation point, and the output module transmits the observation quality score to an external device.

In some examples, the base station addressing device is mounted on a robotic mower after being detached from the base station body to move along with the robotic mower and perform the addressing task.

In some examples, the base station addressing device further includes a power supply module configured to supply electrical energy to at least the acquisition module, the calculation module, and the output module.

In some examples, the power supply module includes a primary battery or a secondary battery.

In some examples, the power supply module includes a power supply interface electrically connected to an external device so that the base station addressing device is powered.

In some examples, the base station includes a radio and a satellite antenna.

A base station addressing device includes: a device body; and multiple light beads disposed on the device body and having different orientations. The multiple light beads are turned on or off in response to the observation quality of a base station addressing device at a current observation point; and when some of the multiple light beads are turned on, light beads that are turned on indicate a movement direction from the current observation point to a next observation point.

In some examples, when all the multiple light beads are turned on, the base station addressing device at the current observation point satisfies an installation addressing condition of the base station.

In some examples, eight light beads are provided.

In some examples, the multiple light beads are arranged in a ring at equal angular intervals on the same plane of the device body.

In some examples, the multiple light beads correspond to different addressing intervals, and each of the multiple light beads is turned on or off in response to the observation quality of a respective addressing interval of the different addressing intervals.

A base station addressing method based on differential positioning technology includes: acquiring satellite observation data at a current observation point; determining the measured values of the number of observable satellites, satellite elevation angles, and signal-to-noise ratios at the observation point according to the satellite observation data; and guiding a base station addressing task according to at least the measured values of the number of satellites, the satellite elevation angles, and the signal-to-noise ratios at each observation point to ultimately determine a mounting position of a base station.

In some examples, guiding the base station addressing task according to the measured values of the number of satellites, the satellite elevation angles, and the signal-to-noise ratios at each observation point to ultimately determine the mounting position of the base station includes: obtaining multiple addressing intervals through division with the observation point as an addressing center; and determining addressing difference data corresponding to the measured values and ephemeris values of the number of satellites, satellite elevation angles, and signal-to-noise ratios in each of the multiple addressing intervals according to the satellite observation data and ephemeris data at the observation point; and determining an observation quality score of each of the multiple addressing intervals according to the addressing difference data of each of the multiple addressing intervals and guiding the base station addressing task according to the observation quality score of each of the multiple addressing intervals.

In some examples, determining the addressing difference data corresponding to the measured values and the ephemeris values of the number of satellites, the satellite elevation angles, and the signal-to-noise ratios in each of the multiple addressing intervals according to the satellite observation data and the ephemeris data at the observation point includes one or more of the following: determining a first addressing difference between the number of satellites existing in each of the multiple addressing intervals in real-time ephemeris data and the number of observable satellites in each of the multiple addressing intervals in the satellite observation data; determining a second addressing difference between the number of satellites with satellite elevation angles exceeding an elevation angle threshold existing in each of the multiple addressing intervals in real-time ephemeris data and the number of observable satellites with satellite elevation angles exceeding the elevation angle threshold in each of the multiple addressing intervals in the satellite observation data; or determining a third addressing difference between the number of satellites with signal-to-noise ratios exceeding a signal-to-noise ratio threshold existing in each of the multiple addressing intervals in real-time ephemeris data and the number of observable satellites with signal-to-noise ratios exceeding the signal-to-noise ratio threshold in each of the multiple addressing intervals in the satellite observation data.

In some examples, determining the observation quality score of each of the multiple addressing intervals according to the addressing difference data of each of the multiple addressing intervals includes: performing a weighted summation of the first addressing difference, the second addressing difference, and the third addressing difference for each addressing interval to obtain the observation quality score for this addressing interval.

In some examples, guiding the base station addressing task according to the observation quality score of each of the multiple addressing intervals includes: in the case where an observation quality score of an addressing interval of the multiple addressing intervals is lower than a score threshold, selecting multiple reference observation satellites from multiple observable satellites at the observation point; and determining a movement direction from the current observation point to a next observation point according to satellite azimuth angles of the multiple reference observation satellites.

In some examples, determining the movement direction from the current observation point to the next observation point according to the satellite azimuth angles of the multiple reference observation satellites includes: determining the satellite azimuth angle interval between adjacent reference observation satellites, where no other reference observation satellites exist between the adjacent reference observation satellites in the same azimuth rotation direction; and determining the movement direction from the current observation point to the next observation point according to the satellite azimuth angles of two reference observation satellites corresponding to the largest satellite azimuth angle interval, where the movement direction is the reverse extension direction of the angle bisector of the largest satellite azimuth angle interval.

In some examples, guiding the base station addressing task according to the observation quality score of each of the multiple addressing intervals includes: if the observation quality scores of all addressing intervals of any observation point exceed a first score threshold, determining that this observation point is the mounting position of the base station.

In some examples, guiding the base station addressing task according to the observation quality score of each of the multiple addressing intervals further includes: if the observation quality scores of all addressing intervals of multiple observation points do not exceed the first score threshold, replacing the first score threshold with a second score threshold to recalculate the observation quality scores of the addressing intervals of the observation points, where the second score threshold is less than the first score threshold.

A base station addressing method based on differential positioning technology includes: determining a mounting position of the base station according to first feature data and second feature data of each observation point; where the first feature data is related to a satellite observation condition when the base station is located at the observation point, the second feature data is related to a signal coverage condition within the working region of the self-propelled device when the base station is located at the observation point, and the second feature data is acquired during the movement of the self-propelled device within the working region.

In some examples, acquiring the second feature data during the movement of the self-propelled device within the working region includes: moving, by the self-propelled device, to the first detection point, which is the farthest from the first observation point where the base station is currently located in the working region, to detect the signal coverage condition of the base station at the first observation point with respect to the self-propelled device at the first detection point; and in the case where the self-propelled device cannot receive the signal from the base station at the first observation point, moving the base station toward the first detection point to the second observation point within a preset distance range of the first observation point.

In some examples, determining the mounting position of the base station according to the first feature data and the second feature data of each observation point includes: detecting the signal coverage condition of the base station at the second observation point with respect to the self-propelled device at the first detection point; calculating the observation quality score of the second observation point according to the first feature data of the second observation point; and in the case where the observation quality score exceeds a score threshold and the self-propelled device receives the signal from the base station at the second observation point, determining that the second observation point is the mounting position of the base station.

An external device includes a display device and an electronic processor. The electronic processor is configured to display the map of the working region of the self-propelled device and the addressing questionnaire corresponding to the working region through the display device and collect the position selection data provided by the user; and determine the recommended mounting position of the base station according to at least the position selection data and display the recommended mounting position on the map through the display device.

In some examples, collecting, by the external device, the position selection data provided by the user includes one or more of the following: in response to the user operation, acquiring or modifying the region boundary of the working region; in response to the user operation, acquiring or modifying the obstruction range in the map; in response to the user operation, acquiring or modifying the obstruction height in the map; or in response to the user operation, acquiring the candidate mounting points selected by the user.

In some examples, the electronic processor evaluates the observation quality at each candidate mounting point according to one or more of the region boundary, the obstruction range, or the obstruction height and then determines the recommended mounting points from multiple candidate mounting points according to the observation quality at the candidate mounting points.

In some examples, the external device further includes a communication device interacting with the base station and/or the self-propelled device; and the electronic processor is further configured to acquire, through the communication device, the satellite observation data acquired by the base station at the recommended mounting point and then, according to the satellite observation data, guide the base station through the display device to perform the addressing fine-adjustment task near the recommended mounting point.

In some examples, the external device further includes a communication device interacting with the base station and/or the self-propelled device; and the electronic processor is further configured to acquire, through the communication device, the first feature data and the second feature data of the base station at the recommended mounting point and then, according to the first feature data and the second feature data, guide the base station through the display device to perform the addressing fine-adjustment task near the recommended mounting point.

In some examples, the base station performs the addressing fine-adjustment task within the preset distance range of the recommended mounting point to determine a new recommended mounting point.

A base station based on differential positioning technology is used for positioning and navigating a self-propelled device performing a work task within a working region. The base station includes a base station body, a power consumption module, and a power supply module electrically connected to the power consumption module. The power consumption module is configured to receive or transmit data to enable positioning and navigation of the self-propelled device. The power supply module is configured to supply power to at least the power consumption module. The power supply module includes a first battery pack detachably connected to the base station body, and the first battery pack is detached from the base station body and electrically connected to a power tool to supply power to the power tool.

In some examples, the self-propelled device is powered by a battery pack the same as the first battery pack.

In some examples, the self-propelled device is powered by a second battery pack different from the first battery pack.

In some examples, the capacity of the second battery pack is greater than the capacity of the first battery pack.

In some examples, the power supply voltage of the second battery pack is less than the power supply voltage of the first battery pack.

In some examples, the base station body includes a storage compartment located at the bottom of the base station body, and the power supply module is at least partially accommodated in the storage compartment.

In some examples, the power consumption module includes a radio communicatively connected to the self-propelled device and configured to receive the state signal of the self-propelled device transmitted by the self-propelled device; and the power supply module enters the standby mode after receiving the charging state signal.

In some examples, the power supply module exits the standby mode after receiving the working state signal.

In some examples, the power consumption module includes a radio communicatively connected to the self-propelled device and configured to receive the distance parameter between the self-propelled device and the base station transmitted by the self-propelled device; and the power consumption module stores preset segmented intervals of the distance parameter and transmits data to the self-propelled device through the radio at segmented frequencies.

### BRIEF DESCRIPTION OF DRAWINGS

FIG. 1 is a schematic view of a base station and a working region of a self-propelled device where a base station addressing device is located in the present application.
FIG. 2 is a perspective view of a base station as an example of the present application.
FIG. 3 is a schematic diagram of electric control of the base station shown in FIG. 2.
FIG. 4 is a perspective view of a base station as another example of the present application.
FIG. 5 is a schematic diagram of electric control of the base station shown in FIG. 4.
FIG. 6A is a plan view of a base station addressing device as an example of the present application.
FIG. 6B is another plan view of the base station addressing device shown in FIG. 6A.
FIG. 7 is a schematic view of addressing ranges corresponding to light beads in the base station addressing device shown in FIGS. 6A and 6B.
FIG. 8 is a control flowchart of a base station addressing method as an example of the present application.
FIG. 9 is a schematic view illustrating a movement direction from a current observation point to a next observation point in the base station addressing method shown in FIG. 8.
FIG. 10 is a schematic view of a base station addressing method as another example of the present application.
FIG. 11 is a schematic diagram of electric control of an external device as an example of the present application.

### Reference list

- 10: self-propelled device
- 20/20a/20b: base station
- 30: satellite positioning system/satellite
- 40: external device
- 50/50a: base station addressing device
- 60: power tool
- 210: base station body
- 220: power consumption module
- 230: power supply module
- 211: storage compartment
- 212: support rod
- 221: radio
- 222: satellite antenna
- 231: first battery pack
- 41: display device
- 42: electronic processor
- 43: communication device
- 51: device body
- 52: indicator light/light bead
- 510: acquisition module
- 520: calculation module
- 530: output module

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate member and the two members or assemblies are connected by the at least one intermediate member. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, a lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned units.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Technical solutions proposed in the present application are further described in detail in conjunction with drawings and examples.

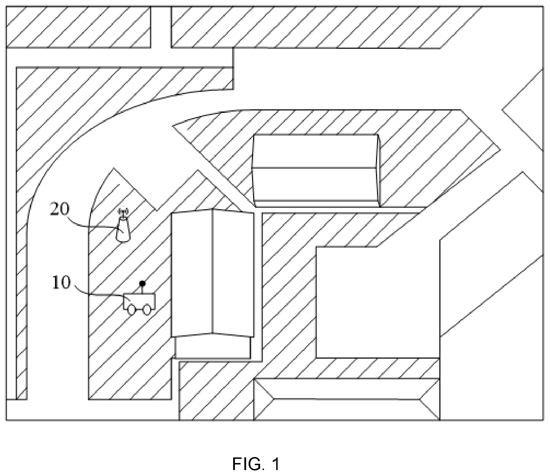

As shown in FIG. 1, a base station 20 is disposed in a working region of a self-propelled device 10. Based on the mounting position of the base station 20 and the observation data from a satellite positioning system, the base station 20 can calculate differential data for correcting positioning errors of the satellite positioning system and transmit the differential data to the self-propelled device 10. However, in the working region of the self-propelled device 10, due to terrain conditions and the presence of obstructions such as buildings, the installation of the base station 20 at different positions may cause significant differences in accuracy. How to effectively determine the mounting position of the base station 20 is closely related to the subsequent operation of the self-propelled device 10 and is an important problem that needs to be solved urgently in the related art.

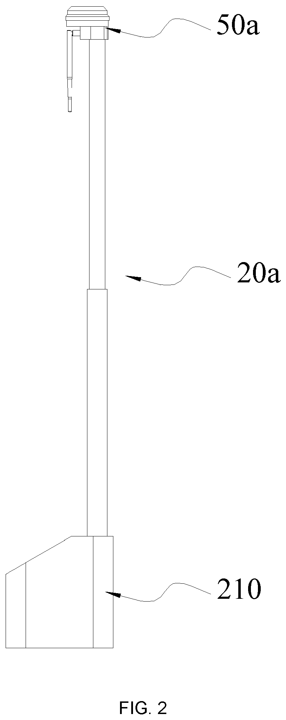

FIG. 2 shows a base station 20a as an example of the present application. The base station 20a is used for implementing differential positioning in the working region of the self-propelled device 10. That is, the base station 20a is based on differential positioning technology. As shown in FIG. 2, the base station 20a includes a base station body 210 and a base station addressing device 50a. The base station body 210 and the base station addressing device 50a are detachably connected. The base station body 210 includes at least a housing or other supporting/accommodation components, while the base station addressing device 50a includes functional modules with communication and logical computation functions. The base station addressing device 50a can be detached from the base station body 210 and then perform the base station addressing task so that the base station addressing process can ensure portability, flexibility, and convenience for relevant personnel.

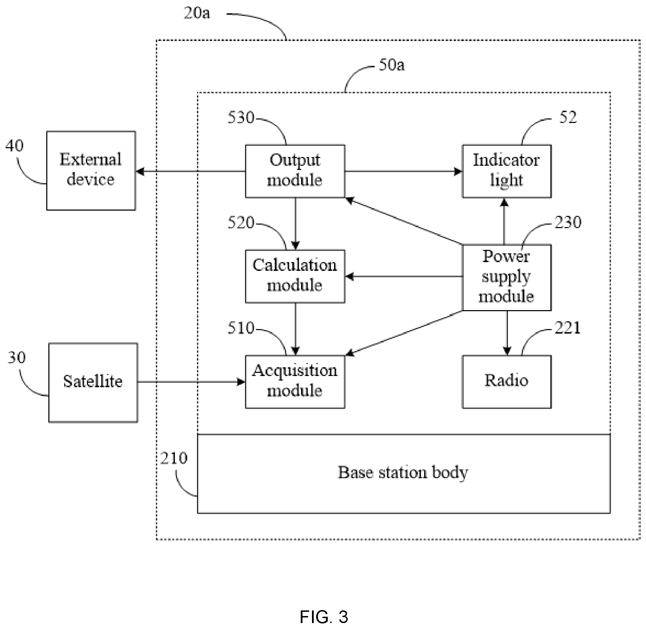

Referring to FIG. 3, the base station addressing device 50a may include an acquisition module 510, a calculation module 520, and an output module 530. The acquisition module 510 is communicatively connected to the satellite positioning system 30. In the drawing, a satellite 30 refers to the satellite positioning system 30. The acquisition module 510 is also connected to the calculation module 520, and the calculation module 520 is also connected to the output module 530. Generally, the connections among the three modules in the base station addressing device 50a are electrical connections, but some intermediate processes may involve communication connections. For example, the calculation and analysis performed by the calculation module 520 may involve related server processing, or the prompt output of the output module 530 may involve interaction with an external device 40.

The acquisition module 510 interacts with the satellite positioning system 30 to acquire satellite observation data at the current observation point and transmits the data to the calculation module 520. The calculation module 520 evaluates the observation quality at the current observation point based on the satellite observation data from the acquisition module 510 and transmits the observation quality to the output module 530. The output module 530 outputs a first prompt based on the observation quality from the calculation module 520. Relevant personnel may refer to the first prompt at the current observation point or at each observation point to decide where to mount the base station 20a. The first prompt indicates the suitability of the current observation point for mounting the differential positioning base station 20a. The first prompt may be expressed in various forms. The specific manner in which the output module 530 outputs the first prompt should correspond to the specific form of the first prompt. The calculation module 520 obtains the observation quality at the current observation point based on the satellite observation data at the current observation point, which may be performed in various forms. The details are described below.

In some examples, the base station addressing device 50a includes indicator lights 52, and the output module 530 may output the first prompt through the indicator lights 52. Specifically, the first prompt may be the state of the indicator lights 52, including, but not limited to, whether the indicator lights 52 are on or off, the number of illuminated indicator lights 52, and the directions corresponding to the illuminated indicator lights 52. In some examples, the base station addressing device 50a includes multiple light beads 52 with different orientations, and the output module 530 provides first prompts with different meanings by not lighting up the light beads 52, lighting up some of the multiple light beads 52, or lighting up all the light beads 52. For example, the output module 530 may indicate the movement direction from the current observation point to the next observation point by lighting up some of the light beads 52. The suitability of the next observation point for mounting the differential positioning base station 20a should be better than the suitability of the current observation point. By lighting up all the light beads 52, the output module 530 may indicate that the current observation point satisfies an installation addressing condition and may be used as the mounting position of the base station 20a.

In some other examples, the first prompt may be expressed in the form of a score, which is the observation quality score of the current observation point. The output module 530 may transmit the observation quality score of the current observation point to the external device 40. The external device 40 may include a user device with a visualization function such as a smartphone, a tablet computer, or a portable computer or may include a server or server cluster that performs unified addressing management. Relevant personnel may obtain the observation quality score of each observation point by viewing the external device 40 or establishing a communication connection with the external device 40. In some other examples, the external device 40 may present a display interface similar to the multiple light beads 52 through relevant programs, and the user may observe the light beads 52 that are lit up in the device display interface to determine the movement direction.

In some examples, after being detached from the base station body 210, the base station addressing device 50a may be mounted on the self-propelled device 10 such as a robotic mower and may perform the base station addressing task while the self-propelled device 10 such as the robotic mower is moving and performing the work task. For example, while the robotic mower is moving and performing a mowing task in the working region, the base station addressing device 50a, which is detached from the base station body 210 and mounted on the robotic mower, may find the optimal position for mounting the base station 20a in the working region, thereby eliminating the time and effort required for addressing by manual carrying the base station addressing device 50a and thus improving the efficiency and cost of base station addressing.

In some examples, the base station addressing device 50a further includes a power supply module 230, and the power supply module 230 can supply electrical energy to at least the acquisition module 510, the calculation module 520, and the output module 530 in the base station addressing device 50a to ensure that the base station addressing device 50a can perform base station addressing smoothly after being detached from the base station body 210. In some examples, the power supply module 230 may include a secondary battery, that is, a battery that can be reused through charge-discharge cycles, which is more energy-efficient. In some other examples, the power supply module 230 may include a primary battery, that is, a battery that can only be used once, which has the advantage of being easy to obtain and use. In some other examples, the power supply module 230 may include a power supply interface, through which the base station addressing device 50a may be electrically connected to the external device 40 or the self-propelled device 10 so that the external device 40 or the self-propelled device 10 supplies power.

In some examples, the base station 20a further includes a radio 221 and a satellite antenna 222. The radio 221 of the base station 20a is used for achieving data interaction between the base station 20a and the self-propelled device 10. The satellite antenna 222 is used for achieving data interaction between the base station 20a and the satellite positioning system 30. The radio 221 and the satellite antenna 222 may be detached from the base station body 210 along with the base station addressing device 50a to perform the base station addressing task. That is, the base station addressing device 50a may include the radio 221 and the satellite antenna 222. Specifically, the acquisition module 510 of the base station addressing device 50a may include the satellite antenna 222. The power supply module 230 also supplies power to the radio 221 and the satellite antenna 222.

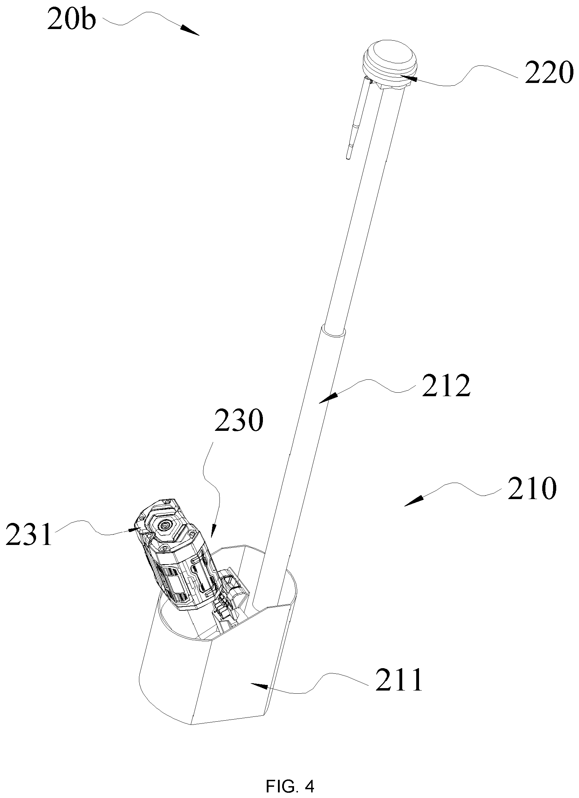

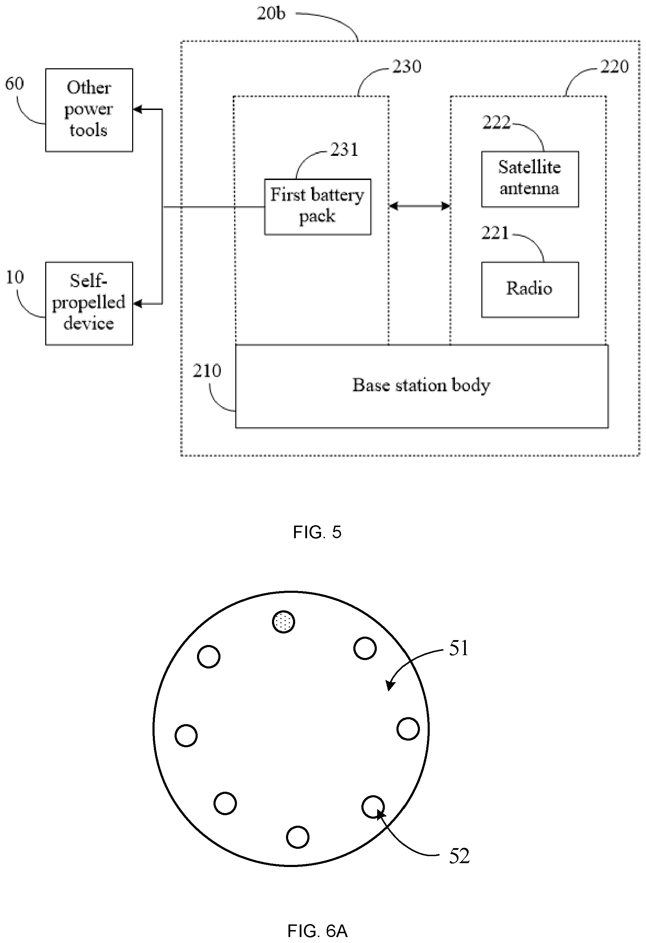

FIG. 4 shows a base station 20b as another example of the present application. Similarly, the base station 20b is used for implementing differential positioning in the working region of the self-propelled device 10. That is, the base station 20b is based on differential positioning technology. As shown in FIGS. 4 and 5, the base station 20b includes a base station body 210, a power consumption module 220, and a power supply module 230. The base station body 210 includes at least a housing or other supporting/accommodation components. The power consumption module 220 can at least receive or transmit data to enable positioning and navigation of the self-propelled device 10. For example, the power consumption module 220 may include the acquisition module, the calculation module, and the output module or may also include the radio and the satellite antenna. The power supply module 230 includes a first battery pack 231 and related power supply circuits. When mounted on the base station body 210, the power supply module 230 may be electrically connected to the power consumption module 220 and can supply power to at least the power consumption module 220. Moreover, the first battery pack 231 in the power supply module 230 is detachably connected to the base station body 210. After being detached from the base station body 210, the first battery pack 231 can be electrically connected to a power tool 60 to supply power to the power tool 60 so that additional power supply options can be provided for the self-propelled device 10 or other power tools 60 in the working region, thereby improving the endurance capability.

The base station is provided with the power supply module containing a detachable battery pack. When mounted in the base station, the power supply module can supply power to the power consumption module in the base station; and when detached, the power supply module can supply power to the self-propelled device or other power tools in the working region, thereby improving the convenience of power supply for devices in relevant scenarios, improving user experience, and reducing costs to a certain extent.

In some examples, the base station body 210 includes a storage compartment 211 located at the bottom of the base station body 210, and the power supply module 230 may be at least partially accommodated in the storage compartment 211. In some other examples, some modules of the power consumption module 220 may be accommodated in the storage compartment 211. In some other examples, the storage compartment 211 is further provided with an openable waterproof cover to cope with rain and snow. In some other examples, the base station body 210 may further include a support rod 212 located on the upper middle part of the base station body 210, the support rod 212 can support the power consumption module such as the radio and the satellite antenna, and the power supply module 230 may be at least partially accommodated in the support rod 212.

In some examples, the self-propelled device 10 may be powered by the detachable first battery pack 231 in the power supply module 230 of the base station 20b. For example, the battery pack used by the self-propelled device 10 and the first battery pack 231 of the base station 20b are of the same model and each have a capacity of 10 Ah. In some other examples, the self-propelled device 10 may be powered by a second battery pack, which is different from the detachable first battery pack 231 in the power supply module 230 of the base station 20. For example, the second battery pack and the first battery pack have different parameters such as power supply currents.

In some examples, the self-propelled device 10 is powered by a second battery pack different from the first battery pack 231 of the base station 20b, and the capacity of the second battery pack used by the self-propelled device 10 is greater than the capacity of the first battery pack 231 of the base station 20b. For example, the capacity of the first battery pack 231 of the base station 20b is 10 Ah, and the capacity of the second battery pack of the self-propelled device 10 is 20 Ah. In some other examples, the capacity of the second battery pack used by the self-propelled device 10 may be less than the capacity of the first battery pack 231 of the base station 20b.

In some examples, the self-propelled device 10 is powered by a second battery pack different from the first battery pack 231 of the base station 20b, and the power supply voltage of the second battery pack used by the self-propelled device 10 is less than the power supply voltage of the first battery pack 231 of the base station 20b. For example, the first battery pack 231 of the base station 20b has a power supply voltage of 56 V, the first battery pack 231 may be accommodated in a package-like shape in the storage compartment 211, and the second battery pack of the self-propelled device 10 has a power supply voltage of 24 V. For another example, the first battery pack 231 of the base station 20b has a power supply voltage of 12 V, the first battery pack 231 may be accommodated in a cylindrical shape in the support rod 212, and the second battery pack of the self-propelled device 10 has a power supply voltage of 24 V.

In some examples, the power consumption module 220 includes the radio 221 and the satellite antenna 222. The base station 20b may establish a communication connection with the self-propelled device 10 through the radio 221 and establish a communication connection with the satellite positioning system 30 through the satellite antenna 222 to exchange satellite observation data, differential data, and other data. Through the radio 221, the base station 20b may also receive the state signal transmitted by the self-propelled device 10. The state signal represents the state of the self-propelled device 10, including the working state signal when the self-propelled device 10 is performing various work tasks normally and the charging state signal when the self-propelled device 10 returns to the charging pile for charging. After receiving the charging state signal, the power supply module 230 may enter the standby mode, for example, by cutting off the power supply circuit or reducing the power supply voltage. After receiving the working state signal, the power supply module 230 may exit the standby mode, for example, by restoring the power supply circuit or increasing the power supply voltage.

In some other examples, through the radio 221, the base station 20b may also receive the distance parameter between the self-propelled device 10 and the base station 20b transmitted by the self-propelled device 10. The power consumption module 220 prestores preset segmented intervals of the distance parameter. After receiving the distance parameter transmitted by the self-propelled device 10, the base station 20b may correspondingly transmit the satellite observation data and/or differential data to the self-propelled device 10 through the radio 221 at segmented frequencies to achieve variable frequency data transmission adapted to the distance between the self-propelled device 10 and the base station 20b. The segmented frequencies correspond to the segmented intervals of the distance parameter. Specifically, the base station 20b may transmit the preceding data at a lower frequency when the base station 20b is closer to the self-propelled device 10. In some other examples, after receiving the distance parameter transmitted by the self-propelled device 10, the power consumption module 220 may transmit the satellite observation data and/or differential data to the self-propelled device 10 through the radio 221 at segmented power levels to achieve variable power data transmission adapted to the distance between the self-propelled device 10 and the power consumption module 220. The segmented power levels correspond to the segmented intervals of the distance parameter. Specifically, the base station 20b may transmit the preceding data at a lower power level when the base station 20b is closer to the self-propelled device 10.

It is to be understood that the base station 20a and the base station 20b shown in FIGS. 2 to 5 may be independent solutions or may be combined into the same base station 20. That is, the base station 20 based on differential positioning technology may only have the function that the differential addressing device is detachable to perform the base station addressing task, or may only have the function that the battery pack is detachable to supply power to the power tool, or may have both the detachable differential addressing device and the detachable battery pack.

In addition, another base station based on differential positioning technology is proposed, which also includes the base station body, the power consumption module, and the power supply module. The power supply module of the base station includes a secondary battery that can be reused through charge-discharge cycles and a solar-to-electrical energy conversion unit. The solar-to-electrical energy conversion unit may be mounted at a position on the base station body that is conducive to absorbing solar energy, and the solar-to-electrical energy conversion unit can convert solar energy into electrical energy for charging the secondary battery. The secondary battery may supply power to at least the power consumption module in the base station. In some examples, the secondary battery may be detached from the base station body to supply power to the self-propelled device or other power tools. In some other examples, the power supply module of the base station may use other energy conversion units such as a wind-to-electrical energy conversion unit or a geothermal-to-electrical energy conversion unit, instead of the solar-to-electrical energy conversion unit. The specific design may be adapted to the actual scenarios to further achieve the technical effects of green environmental protection and cost saving. Another base station based on differential positioning technology is proposed, which also includes the base station body, the power consumption module, and the power supply module. The power supply module of the base station includes an access unit that can be connected to the mains power. The base station may be disposed at a position near a mains power access port in the working region, such as a position near a charging pile, so that the base station can be powered by wires, thereby eliminating the need to purchase and arrange components such as the battery pack and the solar-to-electrical energy conversion panel, making it cheaper and more convenient.

The base station addressing device 50 is described below. In some examples, the base station addressing device 50 may be used as the base station addressing device 50a that can be detachably connected to the base station body 210 in the base station 20a. Of course, the base station addressing device 50 may also exist as an independent device, which does not constitute a specific limitation here.

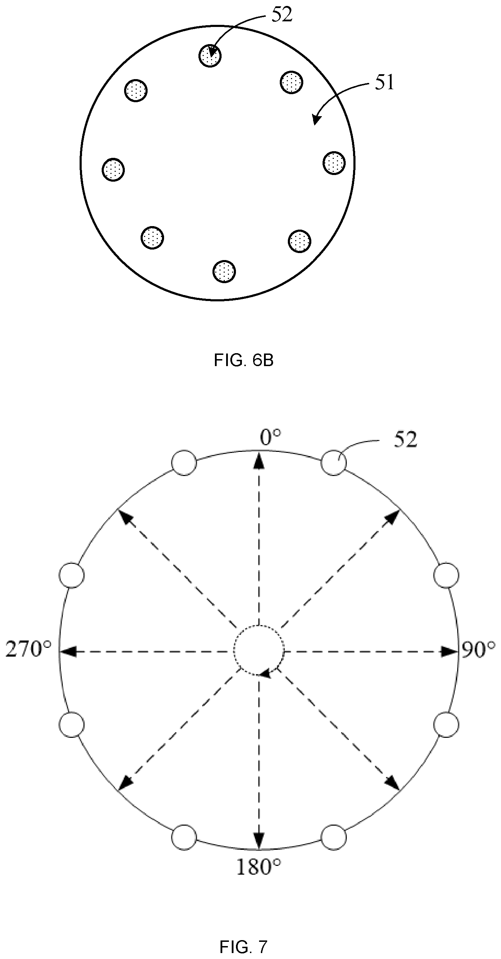

FIGS. 6A and 6B show the base station addressing device 50 as an example of the present application. As shown in FIGS. 6A and 6B, the base station addressing device 50 includes a device body 51 and multiple light beads 52 disposed on the device body. The multiple light beads 52 have different orientations and are generally disposed on the same plane of the device body 51. In some examples, eight light beads 52 may be provided. In some other examples, the light beads 52 may be arranged in a ring at equal angular intervals on the same plane of the device body 51. The light beads 52 are turned on or off in response to the observation quality of the base station addressing device 50 at the current observation point. When some light beads 52 are turned on, the light beads 52 that are turned on indicate the movement direction from the current observation point to the next observation point. The observation quality at the next observation point should generally be better than that at the current observation point so that the base station addressing device 50 continuously approaches the optimal position for mounting the base station 20. In some examples, one light bead 52 is lit up at a time, and the light bead 52 indicates the optimal movement direction from the current observation point to the next observation point. In some other examples, one or more light beads 52 are lit up at a time, and the one or more light beads 52 that are lit up indicate one or more optional movement directions from the current observation point to the next observation point.

In some examples, when all the light beads 52 are lit up, the base station addressing device 50 at the current observation point can satisfy the addressing condition for mounting the base station 20, and relevant personnel may mount the base station 20 at the current observation point.

In some examples, the light beads 52 on the base station addressing device 50 represent different addressing intervals, and whether a light bead 52 is turned on or off is related to the observation quality in the addressing interval corresponding to this light bead 52. The base station addressing device 50 with eight light beads 52 shown in FIGS. 6A and 6B is used as an example. The addressing intervals are described using the azimuth angle ranges. With the due north direction as an azimuth angle of 0°, due east 90°, due south 180°, due west 270°, and 360° are shown sequentially in a clockwise direction. In some cases, as shown in FIG. 7, the azimuth angle range of the addressing interval corresponding to each light bead 52 may be constant and may not change with the rotation of the base station addressing device 50. For example, eight addressing intervals may be set with azimuth angle ranges of 0° to 45°, 45° to 90°, 90° to 135°, 135° to 180°, 180° to 225°, 225° to 270°, 270° to 315°, and 315° to 360°. The eight light beads 52 on the base station addressing device 50 may be in one-to-one correspondence with the eight addressing intervals. During the rotation of the base station addressing device 50, the actual orientation of each light bead 52 in the physical world may not necessarily be consistent with the azimuth angle range of the corresponding addressing interval. In some other cases, the azimuth angle range of the addressing interval corresponding to each light bead 52 may be non-constant and may change with the rotation of the base station addressing device 50. Specifically, the azimuth angle range of the addressing interval corresponding to each light bead 52 may be consistent with the actual orientation of this light bead 52 in the physical world. For example, if the azimuth angle range of the addressing interval corresponding to a certain light bead 52 is currently 0° to 45° and the base station addressing device 50 rotates by 180°, then the azimuth angle range of the addressing interval corresponding to this light bead 52 changes to 180° to 225°.

The base station addressing method based on differential positioning technology is described below. In some examples, the base station addressing method may be applied to the base station addressing device 50a or the base station addressing device 50. Of course, the base station addressing method may also be applied to other types of devices that perform base station addressing tasks. For example, the base station 20 may directly perform addressing, which does not constitute a specific limitation here. The base station addressing device 50 is used as the entity for performing this solution to facilitate the subsequent exemplary description.

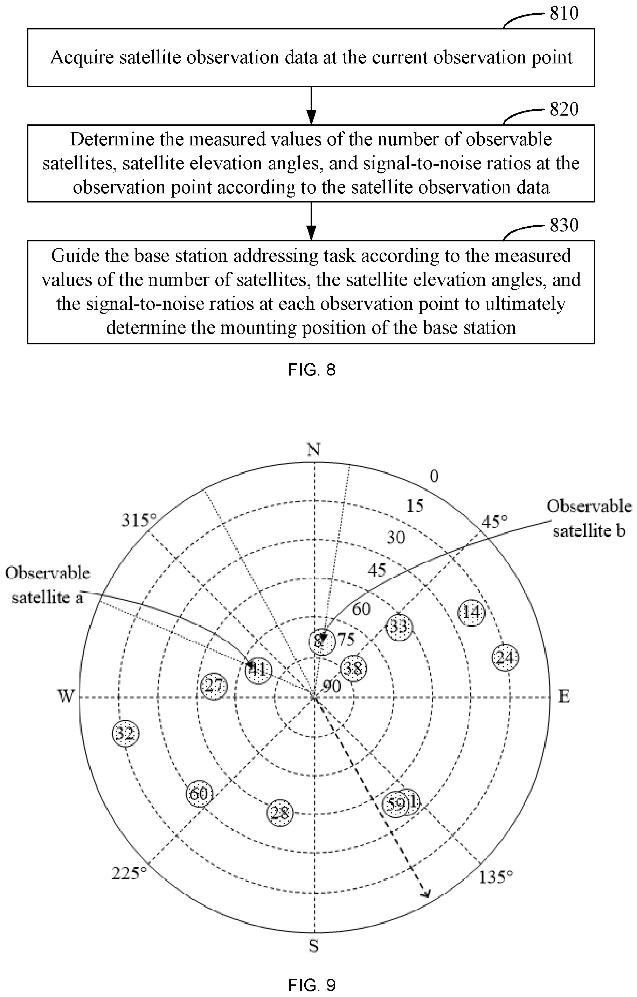

FIG. 8 shows a base station addressing solution as an example of the present application. This solution is applied to a differential positioning system formed by the self-propelled device 10, the base station 20, and the satellite positioning system. That is, the control flow of the base station addressing method based on differential positioning technology includes the following.

In 810, satellite observation data at the current observation point is acquired.

In 820, the measured values of the number of observable satellites, satellite elevation angles, and signal-to-noise ratios at the observation point are determined according to the satellite observation data.

In 830, the base station addressing task is guided according to at least the measured values of the number of satellites, the satellite elevation angles, and the signal-to-noise ratios at each observation point to ultimately determine the mounting position of the base station.

The base station addressing device 50 first interacts with the satellite positioning system 30 to acquire the satellite observation data at the current observation point. That is, the data interaction between the base station 20 at the current observation point and the satellite positioning system 30 is simulated. Then, according to the satellite observation data, the base station addressing device 50 may determine the number of observable satellites at the current observation point as well as the measured values of the satellite elevation angles and the signal-to-noise ratios of the observable satellites. In this manner, the base station addressing task may be guided based on at least the measured values of the number of satellites, the satellite elevation angles, and the signal-to-noise ratios at each observation point to ultimately determine the mounting position of the base station 20.

The measured values of the number of observable satellites, the satellite elevation angles, and the signal-to-noise ratios at the current observation point obtained from the satellite observation data can actually reflect the suitability of the current observation point as the mounting position of the base station 20. The observable satellites at the current observation point are those in the satellite positioning system 30 that can actually communicate smoothly with the base station addressing device 50 at this observation point. The satellite elevation angle is the elevation angle between the line connecting the satellite and the current observation point and the ground plane at this observation point. The satellite elevation angle affects the inherent communication quality between the satellite and the base station addressing device 50 at the current observation point. The signal-to-noise ratio is the power ratio of the effective signal to the noise in the channel between the satellite and the base station addressing device 50 at the current observation point. Both the signal-to-noise ratio and the number of observable satellites can reflect the actual communication quality between the current observation point and the satellite positioning system 30. As shown in FIG. 9, the outer circle on the outermost side represents the satellite coverage range at the current observation point. The center of the outer circle is the current observation point. Multiple concentric circles of the outer circle mark different satellite elevation angles. The satellite elevation angle at the center is 90°, and the satellite elevation angle decreases progressively by 15° until the satellite elevation angle reaches 0° at the outer circle. The values on the circumference of the outer circle mark different satellite azimuth angles. The due north direction has an azimuth angle of 0°, and the azimuth angle increases progressively by 45° clockwise, passing through due east 90°, due south 180°, and due west 270°, until returning to due north at 360°. Multiple smaller circles distributed within the outer circle represent the observable satellites at the current observation point. The satellite elevation angle corresponding to the concentric circle where the smaller circle lies is the measured satellite elevation angle of this observable satellite. The value inside the smaller circle is the measured signal-to-noise ratio of this observable satellite. The number of smaller circles within the outer circle is the total number of observable satellites at the current observation point. To put it simply, the greater the number of observable satellites at an observation point is and the greater the satellite elevation angles and the signal-to-noise ratios are, the more suitable this observation point is as the mounting position of the base station 20.

In an example, corresponding to the base station addressing device 50 described above, in the process of guiding the base station addressing task according to the measured values of the number of satellites, the satellite elevation angles, and the signal-to-noise ratios at each observation point to ultimately determine the mounting position of the base station 20, firstly, the current observation point may be used as the addressing center, and multiple addressing intervals may be obtained through division. FIG. 9 is used as an example in which the intervals may be obtained through division based on the azimuth angles, resulting in eight addressing intervals with azimuth angles of [0°, 45°], [45°, 90°], [90°, 135°], [135°, 180°], [180°, 225°], [225°, 270°], [270°, 315°], and [315°, 360°]. Then, based on the satellite observation data and ephemeris data at the current observation point, the number of observable satellites, the satellite elevation angles, and the signal-to-noise ratios in each addressing interval of the current observation point may be determined in both measured values and ephemeris values, thereby obtaining corresponding addressing difference data. The ephemeris data at each observation point is the satellite data of all satellites in the satellite positioning system. The ephemeris values of the number of satellites, the satellite elevation angles, and the signal-to-noise ratios at the current observation point obtained from the ephemeris data reflect the ideal condition in which no obstruction or interference exists at the observation point and may be used as reference values. The ephemeris values and the measured values at this observation point are combined to obtain the addressing difference data to more accurately reflect the suitability of this observation point as the mounting position of the base station 20. Then, based on the addressing difference data of each addressing interval, the observation quality in this addressing interval may be evaluated so that the observation quality score corresponding to this addressing interval can be calculated, thereby guiding the subsequent base station addressing task based on the observation quality scores of the addressing intervals. In some examples, in conjunction with the relevant content of the base station addressing device 50 described above, assuming that the base station addressing device 50 has the light beads 52 corresponding to the eight addressing intervals, after obtaining the observation quality scores of the addressing intervals, the base station addressing device 50 may light up the light bead 52 corresponding to the addressing interval with the highest score or may light up the light beads 52 corresponding to one or more addressing intervals with scores exceeding a preset score threshold, thereby guiding the base station addressing device 50 to move to a better mounting position of the base station 20.

In some examples, in the case where the observation quality scores of all addressing intervals of the current observation point exceed a first score threshold, the base station addressing device 50 may determine that the current observation point can be used as the mounting position of the base station 20. In some other examples, if the observation quality scores of all addressing intervals of multiple observation points do not exceed the first score threshold, the base station addressing device 50 may replace the first score threshold with a second score threshold with a slightly lower value to adapt to special sites with inherently poor observation quality. The applicability of the addressing solution can be enhanced in the stepwise threshold method. In some other examples, the base station addressing device 50 may also include a third score threshold that further replaces the second score threshold, and the value of the third score threshold is slightly lower than the value of the second score threshold.

In some examples, the addressing difference data includes one or more of a first addressing difference, a second addressing difference, or a third addressing difference.

The first addressing difference is the difference between the number of satellites existing in each addressing interval in the real-time ephemeris data and the number of observable satellites in each addressing interval in the actual satellite observation data. For example, N1 satellites exist in the addressing interval [0°, 45°] of the current observation point in the real-time ephemeris data, N1' observable satellites exist in the addressing interval [0°, 45°] of the current observation point in the actual satellite observation data, and the first addressing difference includes N1-N1'. The second addressing difference is the difference between the number of satellites with satellite elevation angles less than a preset elevation angle threshold existing in each addressing interval in the real-time ephemeris data and the number of observable satellites with satellite elevation angles exceeding the elevation angle threshold in each addressing interval in the actual satellite observation data. For example, N2 satellites with satellite elevation angles exceeding the threshold exist in the addressing interval [0°, 45°] of the current observation point in the real-time ephemeris data, N2' observable satellites with satellite elevation angles exceeding the threshold exist in the addressing interval [0°, 45°] of the current observation point in the actual satellite observation data, and the second addressing difference includes N2-N2'. The third addressing difference is the difference between the number of satellites with signal-to-noise ratios exceeding a preset signal-to-noise ratio threshold existing in each addressing interval in the real-time ephemeris data and the number of observable satellites with signal-to-noise ratios exceeding the signal-to-noise ratio threshold in each addressing interval in the actual satellite observation data. For example, N3 satellites with signal-to-noise ratios exceeding the threshold exist in the addressing interval [0°, 45°] of the current observation point in the real-time ephemeris data, N3' observable satellites with signal-to-noise ratios exceeding the threshold exist in the addressing interval [0°, 45°] of the current observation point in the actual satellite observation data, and the third addressing difference includes N3-N3'. The first addressing difference, the second addressing difference, and the third addressing difference may comprehensively reflect the influence of satellite distribution of the satellite positioning system, surrounding topography, and building obstructions on the observation at different observation points, thereby reflecting the suitability of the observation points for mounting the base station 20.

In some examples, the base station addressing device 50 performs a weighted summation of the first addressing difference, the second addressing difference, and the third addressing difference for each addressing interval to obtain the observation quality score for this addressing interval. The summation weights of the first addressing difference, the second addressing difference, and the third addressing difference may be different. In some examples, the observation quality score for the addressing interval may be 100-k1*(N1-N1')-k2*(N2-N2')-k3*(N3-N3').

In some examples, in the case where an addressing interval with an observation quality score lower than the score threshold exists, the base station addressing device 50 may select reference observation satellites from multiple observable satellites at the current observation point and determine the movement direction from the current observation point to the next observation point based on the satellite azimuth angles of the reference observation satellites. In some examples, the reference observation satellites may be observable satellites with satellite elevation angles exceeding the preset elevation angle threshold and signal-to-noise ratios exceeding the preset signal-to-noise ratio threshold. Of course, in some other examples, other requirements for the reference observation satellites may exist.

In some examples, the base station addressing aims to ensure that the addressing intervals have balanced scores and can all satisfy the observation requirements. The direction that can avoid or reduce relevant obstruction interference may be determined based on the reference observation satellites and used as the movement direction of the base station addressing device 50. The base station addressing device 50 first determines the satellite azimuth angle interval between adjacent reference observation satellites. No other reference observation satellites exist between the adjacent reference observation satellites in the same azimuth rotation direction. As shown in FIG. 9, rotating clockwise, the satellite azimuth angle of the reference observation satellite a is 295°, the satellite azimuth angle of the reference observation satellite b is 5°, and no other observable satellites exist between the azimuth angles from 295° to 5°. In this case, the reference observation satellites a and b are adjacent reference observation satellites. The satellite azimuth angle interval between the adjacent reference observation satellites corresponds to the azimuth angle range where no other observable satellites exist between the two adjacent reference observation satellites. Continuing from the preceding example, the satellite azimuth angle interval between the adjacent reference observation satellites a and b is the azimuth angles from 295° to 5° in the clockwise direction. Then, the base station addressing device 50 may determine the movement direction from the current observation point to the next observation point according to the satellite azimuth angles of two reference observation satellites corresponding to the largest satellite azimuth angle interval. The largest satellite azimuth angle interval represents the disadvantageous direction where satellite observation is difficult to achieve at the current observation point. The movement direction may be the reverse extension direction of the angle bisector of the largest satellite azimuth angle interval. Continuing form the preceding example, assuming that the satellite azimuth angle interval between the reference observation satellites a and b has the largest value, at the observation point shown in FIG. 9, the base station addressing device 50 may move toward 150°, which is the reverse extension direction of the angle bisector 330° of the satellite azimuth angle interval between the reference observation satellites a and b to move away from the preceding disadvantageous observation azimuth, thereby improving the observation quality.

Another base station addressing method based on differential positioning technology is described below. Similarly, the base station addressing method may be applied to the base station addressing device 50a or the base station addressing device 50 and may also be applied to the base station 20 or other devices. The base station 20 is used as the execution entity for the subsequent exemplary description.

As another example of the present application, the base station addressing solution may be applied to the differential positioning system formed by the self-propelled device 10, the base station 20, and the satellite positioning system 30. That is, the control flow of the base station addressing solution based on differential positioning technology includes: determining the mounting position of the base station 20 according to the first feature data and the second feature data of each observation point.

The first feature data is related to the satellite observation condition when the base station 20 is located at the current observation point. In some examples, the first feature data may be the satellite observation data and ephemeris data at the current observation point. The second feature data is related to the signal coverage condition within the working region of the self-propelled device 10 when the base station 20 is located at the current observation point. In some examples, the second feature data may be the signal strength of the base station 20. The second feature data may be acquired during the movement of the self-propelled device 10 within the working region.

In some examples, the base station 20 may acquire the first feature data and the second feature data of each observation point to comprehensively determine the observation quality at the observation point. For example, the observation quality score is calculated according to the first feature data and the second feature data at the observation point so that the final mounting position of the base station 20 is determined based on the observation quality at each observation point. For information on the relevant data types and the scoring method such as weighted summation, reference may be made to the preceding description. Of course, other data types or other evaluation methods may be adopted.

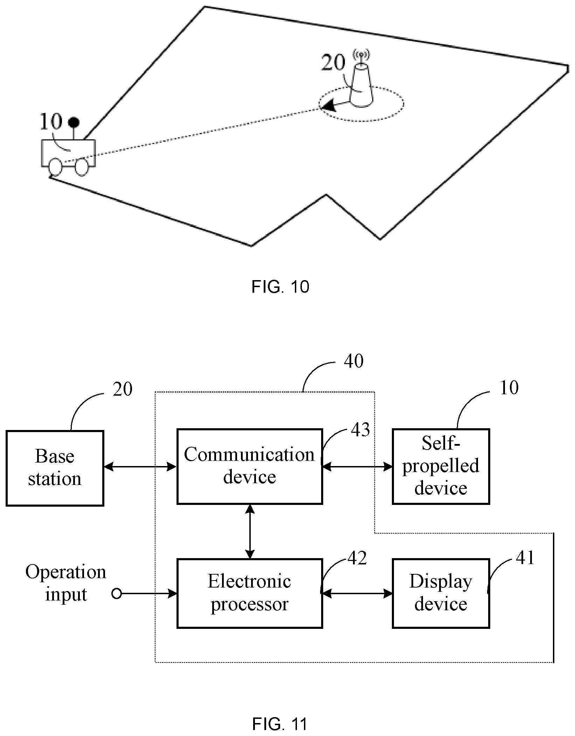

In some examples, referring to FIG. 10, the base station 20 may cooperate with the self-propelled device 10 in the working region to find the optimal mounting position for the base station 20 through the relative movement between the base station 20 and the self-propelled device 10. Assuming that the base station 20 is currently at the first observation point, the self-propelled device 10 may move to the first detection point, which is the farthest from the first observation point in the working region, to detect the signal coverage condition of the base station 20 at the first observation point with respect to the self-propelled device 10 at the first detection point. For example, the self-propelled device 10 may detect whether the self-propelled device 10 can receive a signal from the base station 20 or whether the strength of the signal received by the self-propelled device 10 from the base station 20 is too weak. If the self-propelled device 10 at the first detection point cannot receive the signal from the base station 20 at the first observation point or the strength of the received signal from the base station 20 is too weak, the base station 20 is moved toward the self-propelled device 10 to the second observation point within a preset distance range of the first observation point.

Generally, since the position of the self-propelled device 10 is adjusted slightly within the preset distance range of the first observation point, after the base station 20 is moved to the second observation point, the first detection point is still the point farthest from the second observation point in the working region. The observation quality score at the second observation point is calculated according to the first feature data of the base station 20 at the second observation point, and the signal coverage condition of the base station 20 at the second observation point with respect to the self-propelled device 10 at the first detection point is detected again. If the observation quality score at the second observation point exceeds the score threshold and the self-propelled device 10 at the first detection point can receive the signal from the base station 20 at the second observation point or the strength of the received signal from the base station 20 is no longer too weak, then the second observation point may be determined as the mounting position of the base station 20.

In some examples, the addressing solution shown in FIG. 10 may be used as the supplementary optimization to the addressing solution shown in FIG. 8. When the preceding solution is executed, the base station 20 may select the mounting position of the base station 20 obtained by executing the solution in FIG. 8 as the first observation point and perform the addressing fine-adjustment task within the preset distance range of the first observation point to take into account the signal coverage of the base station 20 with respect to the self-propelled device 10 at each position in the working region, thereby further optimizing the mounting position of the base station 20.

Referring to FIG. 11, the external device 40 may be introduced into the working system of the self-propelled device 10. The external device 40 includes a display device 41 and an electronic processor 42, where the display device 41 and the electronic processor 42 are electrically connected or communicatively connected. The electronic processor 42 may control the display device 41 to display the map of the working region of the self-propelled device 10 and the addressing questionnaire corresponding to the working region. The map of the working region may be pre-constructed or pre-acquired, and the addressing questionnaire may have a unified template. After the unified template is applied to the current map, the corresponding questionnaire may be obtained. The questionnaire may be presented in various forms, such as text and images or audio and video. Then, in response to the user operation, the electronic processor 42 may collect the position selection data provided by the user and then perform analysis and calculation according to at least the collected position selection data to determine the recommended mounting point of the base station 20, and then the recommended mounting point is displayed on the map through the display device 41. One or more recommended mounting points are provided.

In some examples, when collecting the position selection data from the user, the electronic processor 42 of the external device 40, in response to the user operation, may acquire or modify the region boundary of the working region, acquire or modify the obstruction range in the map, acquire or modify the obstruction height in the map, and acquire the candidate mounting points selected by the user, where one or more candidate mounting points are provided. Specifically, the external device 40 may have functions such as touch or click operations and be provided with corresponding modules/devices, and the electronic processor 41 may be electrically or communicatively connected to the corresponding modules/devices to obtain the preceding data or modify the data already obtained.

In some examples, during the process of determining the recommended mounting points of the base station 20, the electronic processor 42 may evaluate the observation quality at each candidate mounting point based on one or more of the obtained region boundary, obstruction range, or obstruction height and then select one mounting point with the best observation quality or more mounting points with better observation quality as the recommended mounting points according to the observation quality at the candidate mounting points. For the observation quality evaluation, reference may be made to the relevant content such as the calculation of the observation quality score. The region boundary in the position selection data is related to the signal coverage condition of the base station 20, while the obstruction range and height affect the data interaction between the base station 20 and the satellite positioning system. The working condition of the base station at each position within the working region may be simulated by using the region boundary, the obstruction range, and the obstruction height.

In some examples, in addition to the display device 41 and the electronic processor 42, the external device 40 further includes a communication device 43. The communication device 43 can be electrically connected to the electronic processor 42 and communicatively connected to the base station 20 and/or the self-propelled device 10. The electronic processor 42 may control the communication device 43 to acquire the satellite observation data acquired by the base station 20 at the recommended mounting point and then, according to the satellite observation data, guide the base station 20 through the display device 41 to perform the addressing fine-adjustment task near the recommended mounting point. For guidance on base station addressing based on the satellite observation data, reference may be made to the relevant content above. In some other examples, the electronic processor 42 may control the communication device 43 to acquire the first feature data and the second feature data acquired by the base station 20 at the recommended mounting point and then, according to the first feature data and the second feature data, guide the base station 20 through the display device 41 to perform the addressing fine-adjustment task near the recommended mounting point. For details, reference may be made to the relevant content above. The electronic processor 42 may display the movement direction from the current observation point to the next observation point through the display device 41 to guide the addressing task. The addressing fine-adjustment task may require a limited adjustment of the mounting position of the base station 20 within the preset distance range of the recommended mounting point. In some other examples, the satellite observation data, the first feature data, or the second feature data obtained through the interaction between the communication device 43 and the base station 20 and/or the self-propelled device 10 may also be used for calculating the observation quality score of the candidate mounting point.

By using the satellite observation data from different observation points to evaluate the observation quality at the observation points, the effective mounting position of the base station can be accurately found within the working region of the self-propelled device so that the performance of the subsequent base station assisting the self-propelled device in positioning and navigation can be improved. The addressing task in the present application is convenient and efficient to execute, and the base station is further provided with the detachable and easy-to-operate base station addressing device.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A base station based on differential positioning technology, the base station being used for positioning and navigating a self-propelled device performing a work task within a working region and comprising:
a base station body; and
a base station addressing device, wherein the base station addressing device comprises:
an acquisition module configured to acquire satellite observation data at a current observation point;
a calculation module configured to evaluate observation quality at the observation point according to the satellite observation data; and
an output module configured to output a first prompt according to the observation quality, wherein the first prompt indicates suitability of the observation point for mounting the base station;
wherein the base station addressing device is detachably connected to the base station body so that the base station addressing device is capable of being detached from the base station body to perform an addressing task.

2. The base station of claim 1, wherein the base station addressing device comprises indicator lights, the first prompt is a state of the indicator lights, and the output module outputs the first prompt through the indicator lights.

3. The base station of claim 2, wherein the indicator lights comprise a plurality of light beads with different orientations, and the output module indicates a movement direction from the current observation point to a next observation point by turning on some of the plurality of light beads.

4. The base station of claim 3, wherein the plurality of light beads correspond to different addressing intervals, and each of the plurality of light beads is turned on or off in response to observation quality of a respective addressing interval of the different addressing intervals.

5. The base station of claim 3, wherein when all the plurality of light beads are turned on, the base station addressing device at the current observation point satisfies a base station addressing condition.

6. The base station of claim 1, wherein the first prompt is an observation quality score of the observation point, and the output module transmits the observation quality score to an external device.

7. The base station of claim 1, wherein the first prompt is an observation quality score of the observation point, and the calculation module is configured to: obtain a plurality of addressing intervals through division with the current observation point as an addressing center; determine addressing difference data corresponding to measured values and ephemeris values of a number of satellites, satellite elevation angles, and signal-to-noise ratios in each of the plurality of addressing intervals according to the satellite observation data and ephemeris data at the observation point; and determine an observation quality score of each of the plurality of addressing intervals according to the addressing difference data of each of the plurality of addressing intervals.

8. The base station of claim 7, wherein the calculation module is further configured to:
in a case where an observation quality score of an addressing interval of the plurality of addressing intervals is lower than a score threshold, select a plurality of reference observation satellites from a plurality of observable satellites at the observation point;
and determine a movement direction from the current observation point to a next observation point according to satellite azimuth angles of the plurality of reference observation satellites.

9. The base station of claim 1, wherein the calculation module is configured to determine a mounting position of the base station according to first feature data and second feature data of each observation point; wherein the first feature data is related to a satellite observation condition when the base station is located at the observation point, the second feature data is related to a signal coverage condition within the working region of the self-propelled device when the base station is located at the observation point, and the second feature data is acquired during movement of the self-propelled device within the working region.

10. The base station of claim 1, wherein the base station addressing device is mounted on a robotic mower after being detached from the base station body to move along with the robotic mower and perform the addressing task.

11. The base station of claim 1, wherein the base station addressing device further comprises a power supply module configured to supply electrical energy to at least the acquisition module, the calculation module, and the output module.

12. The base station of claim 11, wherein the power supply module comprises a primary battery or a secondary battery.

13. The base station of claim 11, wherein the power supply module comprises a power supply interface electrically connected to an external device so that the base station addressing device is powered.

14. The base station of claim 1, comprising a radio and a satellite antenna.

15. The base station of claim 14, further comprising a power supply module configured to supply power to at least the radio and/or the satellite antenna, wherein the power supply module comprises a first battery pack detachably connected to the base station body, and the first battery pack is detached from the base station body and electrically connected to a power tool to supply power to the power tool.

16. A base station addressing device, comprising:
a device body; and
a plurality of light beads disposed on the device body and having different orientations;
wherein the plurality of light beads are turned on or off in response to observation quality of the base station addressing device at a current observation point; and when some of the plurality of light beads are turned on, light beads that are turned on indicate a movement direction from the current observation point to a next observation point.

17. The device of claim 16, wherein the plurality of light beads are arranged in a ring at equal angular intervals on a same plane of the device body.

18. A base station addressing method based on differential positioning technology, comprising:
acquiring satellite observation data at a current observation point;
determining measured values of a number of observable satellites, satellite elevation angles, and signal-to-noise ratios at the observation point according to the satellite observation data; and
guiding a base station addressing task according to at least the measured values of the number of satellites, the satellite elevation angles, and the signal-to-noise ratios at each observation point to ultimately determine a mounting position of a base station.

19. The method of claim 18, wherein guiding the base station addressing task according to the measured values of the number of satellites, the satellite elevation angles, and the signal-to-noise ratios at each observation point to ultimately determine the mounting position of the base station comprises:
obtaining a plurality of addressing intervals through division with the observation point as an addressing center; and determining addressing difference data corresponding to measured values and ephemeris values of a number of satellites, satellite elevation angles, and signal-to-noise ratios in each of the plurality of addressing intervals according to the satellite observation data and ephemeris data at the observation point; and
determining an observation quality score of each of the plurality of addressing intervals according to the addressing difference data of each of the plurality of addressing intervals and guiding the base station addressing task according to the observation quality score of each of the plurality of addressing intervals.

20. The method of claim 19, wherein determining the addressing difference data corresponding to the measured values and the ephemeris values of the number of satellites, the satellite elevation angles, and the signal-to-noise ratios in each of the plurality of addressing intervals according to the satellite observation data and the ephemeris data at the observation point comprises one or more of the following:
determining a first addressing difference between a number of satellites existing in each of the plurality of addressing intervals in real-time ephemeris data and a number of observable satellites in each of the plurality of addressing intervals in the satellite observation data;
determining a second addressing difference between a number of satellites with satellite elevation angles exceeding an elevation angle threshold existing in each of the plurality of addressing intervals in real-time ephemeris data and a number of observable satellites with satellite elevation angles exceeding the elevation angle threshold in each of the plurality of addressing intervals in the satellite observation data; or
determining a third addressing difference between a number of satellites with signal-to-noise ratios exceeding a signal-to-noise ratio threshold existing in each of the plurality of addressing intervals in real-time ephemeris data and a number of observable satellites with signal-to-noise ratios exceeding the signal-to-noise ratio threshold in each of the plurality of addressing intervals in the satellite observation data.
